Europäisches Patentamt

European Patent Office

Office européen des brevets

(19)

(11) Veröffentlichungsnummer: **0 009 625**
**B1**

# (12) EUROPÄISCHE PATENTSCHRIFT

(45) Veröffentlichungstag der Patentschrift:
11.07.84

(21) Anmeldenummer: **79103202.2**

(22) Anmeldetag: **29.08.79**

(51) Int. Cl.³: **G 06 F  15/16**, G 06 F  13/00

(54) **Datentransferschalter mit assoziativer Adressauswahl in einem virtuellen Speicher.**

(30) Priorität: 28.09.78  DE 2842288

(43) Veröffentlichungstag der Anmeldung:
16.04.80 Patentblatt 80/8

(45) Bekanntmachung des Hinweises auf die Patenterteilung:
11.07.84 Patentblatt 84/28

(84) Benannte Vertragsstaaten:
BE FR GB IT NL

(56) Entgegenhaltungen:
DE - A - 2 703 559
DE - A - 2 705 858
US - A - 3 723 976
US - A - 3 800 292
US - A - 3 840 863
PROCEEDINGS OF THE 4TH ANNUAL SYMPOSIUM ON
COMPUTER ARCHITECTURE, 23-25. März 1977,
herausgegeben von IEEE NEW YORK (US) LIPOVSKI:
"On Virtual Memories and Micronetworks" Seiten
125-134
PROCEEDINGS OF THE ANNUAL SYMPOSIUM ON
CUMPUTER ARCHITECTURE, 20-22, Januar 1975,
herausgegeben von IEEE NEW YORK (US) BRUNDAGE
und BATSON: "The Performance Enhancement of
Descriptor-Based Virtual Memory Systems Through the

(73) Patentinhaber: SIEMENS AKTIENGESELLSCHAFT,
Berlin und München Wittelsbacherplatz 2,
D-8000 München 2 (DE)

(72) Erfinder: Nagel, Klaus, Dr., Forstenrieder Allee 17,
D-8000 München 71 (DE)

(56) Entgegenhaltungen: (Fortsetzung)
Use of Associative Registers", Seiten 85-90
IBM TECHNICAL DISCLOSURE BULLETIN, Band 16, Nr.
1, Juni 1973 NEW YORK (US) DAVIS: "Automatic
Heuristic Storage Paging Mechanism" Seiten 366-368

## Beschreibung

Die Erfindung betrifft einen Datentransferschalter mit assoziativer Adressauswahl in einem virtuellen Speicher.

Beim Aufbau von Multiprozessorsystemen sind effiziente Datenaustauschverfahren zur Kommunikation zwischen den Einzelprozessoren vorzusehen. Dabei stellen sich vor allem zwei Aufgaben, deren Bedeutung mit der Anzahl der Prozessoren und mit der Komplexität des behandelten Problems zunimmt. Zum einen muss der Datenaustausch schnell erfolgen, um eine hohe Verarbeitungsleistung des Gesamtsystems zu ermöglichen. Zum anderen muss der zur Realisierung des Datenaustausches nötige Aufwand auch bei einer sehr grossen Anzahl auszutauschender Daten klein bleiben. Insbesondere sollte der Speicherplatz gut ausgenutzt werden, indem jeder Einzelprozessor nur die von ihm benötigten Daten übernimmt. Die Übersichtlichkeit des Gesamtsystems darf dadurch nicht vermindert werden.

In der DE-A-2546202 ist ein Multiprozessorsystem beschrieben, bei dem der Datenaustausch über Koppelspeicher, die jedem Einezlprozessor zugeordnet sind, vorgenommen wird. Die von den Prozessoren in den Koppelspeichern abgelegten Informationen (Ergebnisse) für andere Prozessoren werden in diesem bekannten System folgendermassen verteilt:

Ein zentraler Steuerrechner legt durch einen Schaltbefehl einen Datenweg fest, der von einem ausgewählten Koppelspeicher zu allen anderen Koppelspeichern führt. Durch anschliessende Transferbefehle werden Daten auf diesem Wege aus dem selektierten Speicher gelesen und simultan in die entsprechenden Speicherzellen aller anderen Koppelspeicher geschrieben. Dieser Vorgang wird für die Ergebnisse aller Prozessoren wiederholt. Daraus folgt, dass alle Koppelspeicher die gleichen Datenstrukturen haben. Jeder Koppelspeicher erhält also alle Ergebnisse, auch dann, wenn die einzelnen Prozessoren nur einen Teil davon benötigen.

In der Druckschrift Proceedings of the 4th Annual Symposium on Computer Architecture, 23.–25. März 1977, IEEE, New York (US), LIPOVSKI: «On Virtual Memories and Micronetworks», S. 125–134, ist ein virtueller Speicher beschrieben, der aus gleich aufgebauten Seiten VMC besteht. Die Adressen sind zusammengesetzt aus einer Seitenadresse «high Byte of the Address», welche eine Seite auswählt, und aus einer Lokaladresse «Low Byte of the Address», welche einen Speicherplatz in einer ausgewählten Seite bestimmt. Nur die Seitenadresse einer jeden Seite befindet sich in einem assoziativen Speicherregister «Page Register, Comparator», der diese Seite auswählen kann («Enable»). Dieser virtuelle Speicher kann entweder an eine vordere (DH) oder eine hintere (DT) Systemschiene «Memory Sharing Bus» angeschlossen werden, um so als schaltbarer, virtueller Speicher wahlweise an verschiedene Systeme angeschlossen werden zu können.

Aus der DE-A-2703559 (SIEMENS) ist ein Datentransferschalter mit einem virtuellen Speicher in Verbindung mit einem Assoziativspeicher als Adressenumwandler bekannt. In dieser Druckschrift ist angegeben, dass die Adressen aus einer Seitenadresse (Blockadresse) und aus einer Lokaladresse (Einzeladresse) zusammengesetzt werden können und dass nur die Seitenadressen in dem Assoziativspeicher enthalten sind und zum Vergleich dienen. Es wird allerdings offen gelassen, ob die Blöcke gleich aufgebaut sind.

Aus IBM Technical Disclosure Bulletin, Bd. 16, Nr. 1, Juni 1973, New York (US), DAVIS: «Automatic Heuristic Storage Paging Mechanism», S. 366–368 und US-A-3723976 (ALVAREZ) ist bereits jeweils bekannt, in Rechnersystemen zwischen reeller und virtueller Adressierung zu wählen.

Aus US-A-3840863 (FUQUA) und aus US-A-3800292 (CURLEY) sind jeweils virtuelle Pufferspeicher mit verschiedenen Adressierungsarten bekannt.

Der Erfindung liegt die Aufgabe zugrunde, die erforderliche Grösse des notwendigen Assoziativspeichers durch eine verbesserte Adressierungsart zu verringern.

Die der Erfindung zugrundeliegende Aufgabe wird durch einen Datentransferschalter mit assoziativer Adressauswahl in einem virtuellen Speicher eines Prozessorsystems, wobei der virtuelle Speicher seitenweise organisiert ist, wobei alle Seiten gleich aufgebaut sind, wobei die regulären Systemadressen für beliebige Speicherplätze aus einer Seitenadresse und einer Lokaladresse zusammengesetzt sind, wobei die Seiten durch ihnen individuell zugeordnete Seitenadressen auswählbar sind, wobei über die Seiten gleichnamige Speicherplätze der einzelnen Seiten durch ihnen seitenvielfach zugeordnete Lokaladressen auswählbar sind und wobei ausschliesslich die Seitenadressen dazu dienen, in einem Assoziativspeicher den entsprechenden veränderten Adressenteil der jeweils betreffenden reellen Adresse für den reellen Speicher zu gewinnen, gelöst, der dadurch gekennzeichnet ist, dass ein Register und eine Auswahlsteuerung vorgesehen sind, dass der Auswahlsteuerung jeweils für einen betreffenden Vorgang eine reguläre Systemadresse und eine aus dem Assoziativspeicher gewonnene veränderte Adresse zuführbar sind und dass die Auswahlsteuerung für jedes Bit in Abhängigkeit von dem über ein Setzleitungssystem bestimmten Status des Registers ein der regulären oder der veränderten Adresse entsprechendes Bit im reellen Adresswort in einem Adressbus-Auswahlschalter wirksam werden lässt.

Die Erfindung bietet den Vorteil, dass im Vergleich zu bekannten Systemen nur ein Teil, nämlich der die Seitenadresse betreffende Teil, den Assoziativspeicher in Anspruch nimmt, so dass entsprechend weniger Speicherplatz benötigt wird. Der Assoziativspeicher muss nur so viele Eingänge haben, wie zur Adressierung der in einem Modul benutzten Seiten erforderlich sind. Ausserdem ist vorteilhaft, dass eine einfache Anordnung geschaffen ist, die die bedarfsweise Anwendung unterschiedlicher Asressierungsarten gestattet. Eine Weiterbildung der Erfindung wird durch die in dem Unteranspruch angegebenen Merkmal gekennzeichnet.

Im folgenden werden mehrere Ausführungsbeispiele der Erfindung anhand der Figuren erläutert.

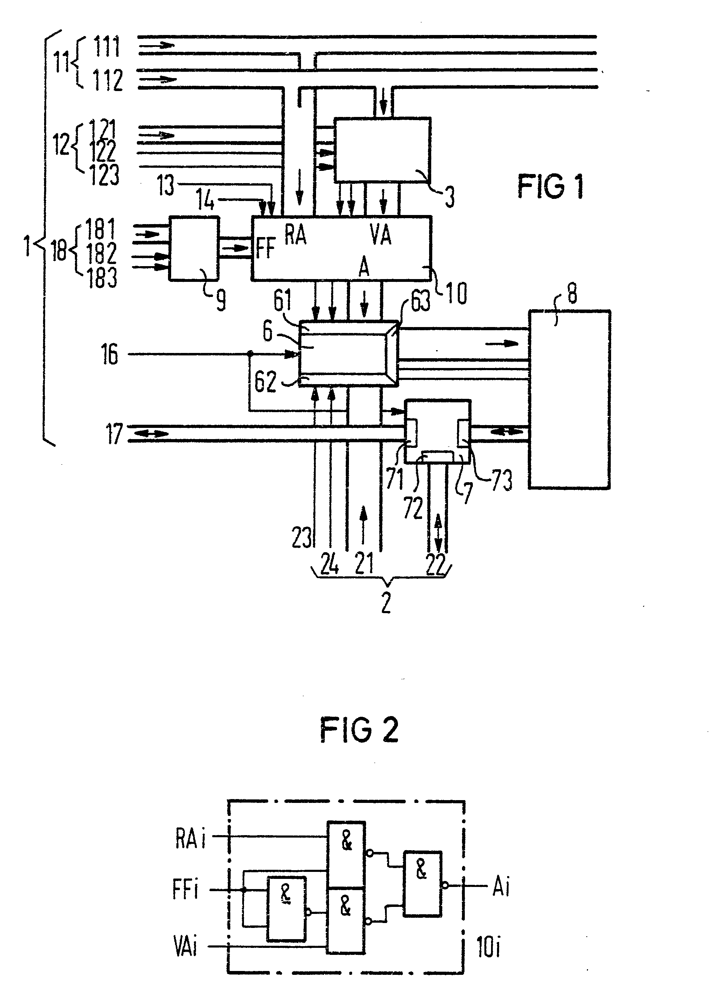

Fig. 1 zeigt das Blockschaltbild eines Ausführungsbeispiels für den erfindungsgemässen Datentransferschalter, bei dem ein Register 9 vorgesehen ist, mittels dessen für jedes Bit der Speicheradressen entschieden wird, ob es unverändert, wie es auf dem Systembus anliegt, übernommen oder aus der von einem Assoziativspeicher 3 gelieferten Adresse gewählt wird. Damit kann sowohl zwischen reeller und virtueller Adressierung gewählt als auch die Seitengrösse in Potenzen von 2 verändert werden,

Fig. 2 zeigt das Schaltbild eines je Bit vorhandenen Verknüpfungsnetzwerks in einer gemäss Fig. 1 vorgesehenen Auswahlsteuerung 10, die durch das Register 9 beeinflussbar ist.

Erfindunggemäss wird einer regulären Systemadresse in einem System-Modul m die reelle Adresse $F_m(SA)+LA$ zugeordnet. Die Funktion $F_m$ wird durch einen von einem zentral im System angeordneten Steuerrechner ladbaren Assoziativspeicher 3 in jedem Modul individuell festgelegt. Aussser den Adressen $F_m(SA)$ liefert der Assoziativspeicher 3 die von Sa abhängigen Steuerinformationen

«Trefferanzeige» $T_m$ und

«Lese-/Schreibkennzeichen» $RW_m(SA)$.

Mit SA ist die Seitenadresse, mit LA die Lokaladresse bezeichnet. Die Trefferanzeige ist ein Signal, das angibt, ob eine gewünschte Adresse tatsächlich vorhanden oder nicht vorhanden ist. Das Lese-/Schreibkennzeichen ist ein Steuersignal, das bestimmt, ob ein Koppelspeicherhinhalt auf den Datenbus gegeben oder ein auf dem Datenbus liegendes Datum von der gewählten Adresse übernommen werden soll.

Im einfachsten Fall ist die Anzahl der Seiten gleich der Anzahl der Module. Die Anzahl der Zeilen enspricht der Anzahl der zulässigen Kopplungen pro Einzelrechner und zusätzlich eine Zeile für den Modul selbst. Er kann vorteilhaft durch einen billigeren, direkt adressierbaren Speicher ersetzt werden, der ein Wort für jede Seite des virtuellen Speichers enthält. Dieser Speicher kann ein Schreib-Lese-Speicher (RAM) sein, wenn die Kopplungsstruktur änderbar sein soll, oder ein Lesespeicher (ROM), wenn sie unverändert bleibt.

Wenn die Seitengrössen im virtuellen Speicher auf Zweierpotenzen festgelegt werden, und wenn als Anfangsadressen $F_m(SA)$ ganzzahlige Vielfache dieser Zweierpotenz gewählt werden, vereinfacht sich die Addition $F_m(SA)+LA$ zur Berechnung der reellen Adresse zu einem Zusammenführen der Adressteile $F_m(SA$ und LA.

Der Datenaustausch läuft wie folgt ab:

Jedem Modul wird eine ganze Anzahl von Seiten im virtuellen Speicher zugewiesen, in denen er auszusendende Daten abspeichert. Dazu müssen die Assoziativspeicher 3 aller Modulen so geladen sein, dass die Seitenadressen der eigenen Seiten als Eingänge belegt sind und dass bei ihnen und nur bei ihnen das Lesekennzeichen gesetzt ist. Sämtliche Adressen des virtuellen Speichers werden der Reihe nach angesteuert. Jeder Modul empfängt die Adressen und prüft, ob die Seitenadressen mit einem Eingang seines Assoziativspeichers übereinstimmen. Wenn das der Fall ist, wird sein reeller Speicher freigegeben, mit der Adresse $F_m(SA)+La$ angesteuert und auf Grund der Information $RW_m(SA)$ wird entweder der Inhalt auf den Datenbs ausgegeben oder das am Datenbus anliegende Datum wird an der angewählten Adresse übernommen.

In den in den Figuren gezeigten Ausführungsbeispielen sind Lösungen angegeben, durch die eine reguläre Systemadresse mittels eines Assoziativspeichers in eine reelle Adresse umzusetzen ist. Die reguläre Systemadresse liegt auf einem Systemadressbuss 11 an, wobei die hochwertigen Bits als Seitenadresse, die niederwertigen als Lokaladresse bezeichnet werden. Nur die Seitenadresse steuert den Assoziativspeicher 3 an. Bei reeller Adressierung wird die Freigabe des Koppelspeichers 8 und die Schreib-/Leseauswahl über die Steuerleitungen des Systembuses 1 vollzogen. Bei virtueller Adressierung wird diese Information seitenabhängig vom Assoziativspeicher geliefert.

In dem in Fig. 1 gezeigten Ausführungsbeispiel liefert der Assoziativspeicher 3 für jede Seite eine volle Anfangsadresse. Über ein Register 9, dessen Status vom Systembus 1 her verändert werden kann, wird für jedes Bit der Speicheradressen entschieden, ob es unverändert, wie es auf dem Systembus 1 anliegt oder aus der vom Assoziativspeicher 3 gelieferten Adresse gewählt wird. Damit kann sowohl zwischen reeller und virtueller Seitenadressierung gewählt als auch die Seitengrösse in Potenzen von 2 verändert werden. Dem Register 9 werden Setzdaten über ein besonderes Leitungssystem 18 zugeführt. Die Ausgänge des Registers 9 sind über eine Schnittstelle FF mit einer Auswahlsteuerung 10 verbunden. Diese Auswahlsteuerung 10 steuert die Auswahl zwischen reeller und virtueller Adressierung über den Inhalt des Registers 9. Dies geschieht mittels einer in Fig. 2 gezeigten Schaltung nach der Verknüpfung.

$$A_i = (RA_i \wedge FF_i) \vee (VA_i \wedge \overline{FF_i}).$$

Dabei bedeuten

$A_i$   i-tes Bit des reellen Ausgangsadresswortes (einschliesslich Steuerbits)

$RA_i$  i-tes Bit des regulären Systemadresswortes (einschliesslich Steuerbits)

$Va_i$  i-tes Bit des veränderten Adresswortes vom Assoziativspeicher (einschliesslich Steuerbits)

$FF_i$  i-tes Bits des Registerwortes.
Beispielsweise gilt für
FF = 00 ... ... 0: virtuelle Seitenadressierung,
FF = 11 ... ... 1: reelle Seitenadressierung,
FF = 00 ... ... 0111: die Seitengrösse ist um den Faktor 8 ($2^3$) vergrössert.

Der erfindungsgemässe Datentransferschalter lässt sich vorteilhaft in Multiprozessorsystemen bei allen Problemen, die sich parallel bearbeiten lassen, wie etwa die Lösung von Systemen partieller Differentialgleichungen (z.B. Wetterprognosen, Potentialfeldberechnungen, Prozesssteuerungen, Simulationsprogrammen) einsetzen.

**Patentansprüche**

1. Datentransferschalter mit assoziativer Adressauswahl in einem virtuellen Speicher eines Prozessorsystems, wobei der virtuelle Speicher seitenweise organisiert ist, wobei alle Seiten gleich aufgebaut sind, wobei die regulären Systemadressen (RA) für beliebige Speicherplätze aus einer Seitenadresse (SA) und einer Lokaladresse (LA) zusammengesetzt sind, wobei die Seiten durch ihnen individuell zugeordnete Seitenadressen (SA) auswählbar sind, wobei über die Seiten gleichnamige Speicherplätze der einzelnen Seiten durch ihnen seitenvielfach zugeordnete Lokaladressen (LA) auswählbar sind und wobei ausschliesslich die Seitenadressen (SA) dazu dienen, in einem Assoziativspeicher (3) den entsprechenden veränderten Adressenteil (VA) der jeweils betreffenden reellen Adresse (A) für den reellen Speicher (8) zu gewinnen, dadurch gekennzeichnet, dass ein Register (9) und eine Auswahlsteuerung (10) vorgesehen sind, dass der Auswahlsteuerung (10) jeweils für einen betreffenden Vorgang eine reguläre Systemadresse (RA) und eine aus dem Assoziativspeicher (3) gewonnene veränderte Adresse (VA) zuführbar sind und dass die Auswahlsteuerung (10) für jedes Bit in Abhängigkeit von dem über ein Setzleitungssystem (18) bestimten Status des Registers (9) ein der rgulären oder der veränderten Adresse entsprechendes Bit im reellen Adresswort (A) in einem Adressbus-Auswahlschalter (6) wirksam werden lässt.

2. Datentransferschalter nach Anspruch 1, dadurch gekennzeichnet, dass die Auswahlsteuerung (10) aus i gleichen Verknüpfungsnetzwerken für i Bits der regulären Adresse (RA), der veränderten Adresse (VA) und des Registerausgangswortes (FF) aufgebaut ist und dass alle i Verknüpfungen nach der Regel $A_i = (RA_i \wedge FF_i) \vee (VA_i \wedge \overline{FF_i})$ auszuführen sind.

**Claims**

1. Data transfer switch with associative address selection in a vitual store of a processor system, wherein the virtual store is organized page wise, wherein all pages are similarly constructed, wherein the regular system addresses (RA) for any storage locations are composed of a page address (SA) and a local address (LA), wherein the pages can be selected by page addresses (SA) individually assigned thereto, wherein via the pages like storage locations of the individual pages can be selected by local addresses (LA) which are assigned thereto in a page multiplexer, and wherein only the page addresses (SA) serve to obtain the corresponding modified address component (VR) of the respectively relevant real address (A) for the real store (8) in an associative store (3), characterised in that there are provided a register (9) and a selection control unit (10), that for a relevant process th selction control unit (10) can be supplied with a regular system address (RA) and a modified address (VA) which is obtained from the associative store (3), and that in dependence upon the status of the register (9), which is determined by means of a setting line system (18), for each bit the selction control unit (10) allows a bit, which corresponds to the regular or the modified address, to become effective in the real address word (A) in an address bus selection switch (6).

2. Data transfer switch as claimed in claim 1, characterised in that the selection control unit (10) is composed of i identical matrices for i bits of the regular address (RA), the modified address (VA) and the register output word (FF), and that all i linkages are to be carried out in accordance with the rule $A_i = (RA_i \wedge FF_i) \vee (VA_i \wedge \overline{FF_i})$.

**Revendications**

1. Commutateur de transfert de données à sélection associative d'adresses dans une mémoire virtuelle d'un système à processeurs, dans lequel la mémoire virtuelle est organisée par pages, toutes les pages sont constituées de façon identique, les adresses régulières du système (RA) pour des positions quelconques de la mémoire sont formées par la réunion d'une adresse de page (SA) et d'une adresse locale (LA), les pages peuvent être sélectionnées par des adresses de pages (SA) †ui leurs sont associées individuellement, et, en ce qui concerne les pages, des positions de mémoire de même nom des différentes pages peuvent être sélectionnées par des adresses locales (SA) qui leur sont associées pour des ensembles multiples de pages et les adresses de pages (SA) servent exclusivement, dans une mémoire associative (3), a obtenir la partie d'adresse modifiée correspondante de l'adresse réelle concernée (A) pour la mémoire réelle (8), caractérisé par le fait qu'il est prévu un registre (9) et un dispositif de commande de sélection (10), qu'une adresse régulière de système (RA) et une adresse modifiée (VA) obtenue à partir de la mémoire associative (3) peuvent être envoyées au dispositif de commande de sélection (10) respectivement pour un processus considéré, et que pour chaque bit, le dispositif de commande de sélection (10) rend actif un bit correspondant à l'adresse régulière ou à l'adresse modifiée, dans le mot d'adresse réel (A) dans un commutateur de sélection de bus de transmission d'adresses, en fonction de l'état du registre (9), qui est déterminé par l'intermédiaire d'un système (18) de lignes de positionnement.

2. Commutateur de transfert de données, suivant la revendication 1, caractérisé par le fait que le dispositif de commande de sélection (10) est constitué par i réseaux identiques de combinaison logique pour i bits de l'adresse régulière (RA), de l'adresse indiquée (VA) et du mot (FF) de sortie du registre, et que l'ensemble des i combinaisons doivent être exécutées conformément à la règle $A_i = (RA_i \wedge FF_i) \vee (VA_i \wedge \overline{FF_i})$.

FIG 1

FIG 2